# EUROPÄISCHE PATENTSCHRIFT

(11) **EP 1 584 536 B1**
(45) Veröffentlichungstag und Bekanntmachung des Hinweises auf die Patenterteilung: **11.06.2008**
(21) Anmeldenummer: 05007521.7
(22) Anmeldetag: 06.04.2005
(51) Int. Cl.: B61K 9/12, G01G 19/04

(54) **Kraftmessvorrichtung zur Erfassung der Schienenbelastung**
Force measuring device for the detection of the load on the rails
Dispositif de mesure de force pour la détection de la charge sur les rails

(30) Priorität: 07.04.2004 DE 102004017613
(43) Veröffentlichungstag der Anmeldung: 12.10.2005
(73) Patentinhaber: Hottinger Baldwin Messtechnik GmbH, 64293 Darmstadt (DE)
(72) Erfinder: Grünbaum, Peter, 8010 Graz (AT); Moser, Christian, 8042 Graz (AT)
(74) Vertreter: Behrens, Helmut

(56) Entgegenhaltungen:
- EP-A1- 0 500 971
- WO-A-02/03040
- DE-A1- 19 941 843
- FR-A- 1 390 054
- US-A- 3 159 227

## Beschreibung

Die Erfindung betrifft eine Kraftmessvorrichtung zur Erfassung der Schienenbelastung, insbesondere durch ein rollendes Schienenfahrzeugrad, gemäß dem Oberbegriff des Patentanspruchs 1.

Durch ein rollendes oder stehendes Rad eines Schienenfahrzeugs wird eine Kraft auf die Schiene ausgeübt, die für die verschiedensten Messaufgaben verwendbar ist. Die Schienenbelastung wurde vor wenigen Jahren nur zur Ermittlung der Achs- o-dcr der Fahrzeuggewichte von schienengebundenen Fahrzeugun verwendet. Mittlerweile ist os für die Sicherheit des Bahnverkehrs bei immer höheren Zuggeschwindigkeiten zunehmend wichtiger, auch Unrundheiten und Flachstellen an den Fahrzeugrädern zu erkennen.

So besteht die Radaufstandskraft, die auf die Schiene wirkt, sowohl aus einer statischen Gewichtsbelastung und einem dynamischen Anteil, der mit zunehmender Geschwindigkeit ansteigen kann. Dabei erhöht sich der dynamische Anteil der Radaufstandskraft, wenn das Rad unrund ist oder über Flachstellen verfügt. Der dynamische Anteil der Radaufstandskraft verteilt sich dabei nicht nur in vertikaler Richtung, sondern auch quer und längs zur Schienenrichtung. Insbesondere bei hohen Zuggeschwindigkeiten kann diese dynamische Radauf standskraft bei Unrundheiten oder Flachstellen so groß werden, dass dadurch Schäden am Rad, an der Schiene oder am Gleisbau verursacht werden, die auch zu Zugunfällen führen können.

Des weiteren kann aus der Summe der Schienenbelastung auch auf den Gleiszustand geschlossen werden, der bei Erreichung einer vorgegebenen Gesamtbelastung Reparatur- oder Instandsetzungsarbeiten notwendig machL. Eine derartige Schienenbelastung soll in Zukunft bei einigen Gleisstreckenbetreibern auch zur Festsetzung einer Übertahrgebühr genutzt werden.

Aus der EP 0 500 971 A1 ist ein dynamisches wägeverfahren für Schienenfahrzeuge bekannt, mit dem ein Großteil der Schienenbelastung beim überfahrenden Bahnverkehr erfassbar ist. Dazu wird die Schubspannung in der neutralen Phase der Schiene erfasst und ausgewertet. Hierzu wird in das Fahrschienennetz eine mit Dehnungsmessstreifen applizierte Wägeschiene eingeschweißt, bei der zwischen den Schwellen mindestens zwei Dehnungsmessstreifen angeordnet sind. Das Waggongewicht wird dabei durch achsweise Addition der Gewichtssignale ermittelt. Mit einer derartigen Einrichtung kann aber die gesamte Schienenbelastung nicht ermittelt werden, wobei insbesondere eine sichere Flachstellenerkennung nicht möglich ist, da diese im Bereich der Schwellen nicht erfasst werden kann.

Eine Vorrichtung zur Ermittlung unrunder Räder an Eisenbahnfahrzeugen ist bereits durch die DE 41 39 342 C1 vorbekannt. Bei dieser Vorrichtung sind auf einer Messstrecke am Schienenfuß im Bereich jeder Schwelle beidseitig jeweils zwei Sensoren aus Dehnungsmessstreifen appliziert, die die Schwellenreaktionskräfte erfassen. Weiterhin sind noch Schubkraftsensoren vorgesehen, die jeweils am Anfang und Ende dcr Messstrecke in der neutralen Phase der Schiene angeordnet sind. Mit einer derartigen Vorrichtung ist aber offensichtlich keine genaue Gewichtsbelastung bei überrollenden Fahrzeugrädern erfassbar.

Aus der DE 198 34 030 A1 ist eine Vorrichtung zur Ermittlung der Gewichtsbelastung auf der Schiene durch überfahrende Gleisfahrzeuge bekannt. Dazu werden im Bereich der Schwelle parallel zu jedem Gleis zwei Doppelbiegebalken angeordnet, die über seitliche Montageplatten mit der Schiene verbunden sind. Die Verbindung zwischen den Schienen und den beiden Doppelbiegebalken erfolgt dabei jeweils vor und hinLer der Schwelle im sogenannten Schwellenfach. In der Mitte stützen sich die Doppelbiegebalken jeweils auf die Schwellen ab, so dass die auf die Schiene wirkenden Vertikalkräfte erfasst werden, mit der auch Unrundheiten und Flachstellen erkennbar sind. Allerdings erfordert eine sichere Flachstellen- oder Unrundheitserkennung die Erfassung auf mindestens einer Radumdrehung von ca. 3,5 m Messstrecke, wozu bei üblichen Schwellenfächern mindestens 28 Kraftaufnehmer notwendig sind. Da es sich bei den beiden Kraftaufnehmern um spezielle hochpräzise doppelseitige Doppelbiegebalken handelt, ist für eine Schienenbelastungsvorrichtung mit Flachstellenerkennung ein hoher apparativer Aufwand notwendig.

Aus der EP 1 212 228 B1 ist eine spezielle Vorrichtung zur Feststellung von Unrundheiten und Flachstellen an schienengebundenen Fahrzeugrädern bekannt. Bei dieser Vorrichtung sind zur Erfassung der Schienenbelastung bei überfahrenden Schienenfahrzeugrädern spezielle Messschwellen vorgesehen, in die quer zur Schienenrichtung Kraftaufnehmer eingelassen sind, auf denen sich die Schienen abstützen. Diese Kraftaufnehmer sind in ihrem Krafteinleitungsteil fest mit der Schiene und ihrem Kraftausleitungsteil fest mit der Schwelle verbunden. Zur Krafteinleitung sowie zur Kraftausleitung sind Kraftrückführungselemente vorgesehen, die die Kraft in einen balkenförmigen Dehnungskörper einleiten. In den Dehnungskörper sind zwei horizontale gegeneinander gerichtete Aussparungen vorgesehen, die in ihrer Mitte eine membranartige Verbindungswand belassen, an der Dehnungsmessstreifen in Form von Scherkraftaufnehmern appliziert sind. Diese Scherkraftaufnehmer befinden sich zentral in vertikaler Richtung unter der Schiene und erfassen dadurch lediglich vertikale Radaufstandskräfte. Mit einer derartigen Vorrichtung ist zwar eine sichere Erkennung von größeren Unrundheiten und Flachstellen feststellbar, aber nicht unbedingt ein Wert für die gesamte Gleisbelastunq ermittelbar.

Aus der WO 02/03040 A1 ist eine Wägevorrichtung für Schienenfahrzeuge bekannt, bei der zwischen der Schiene und herkömmlichen Schwellen quer angeordnete Kraftaufnehmer vorgesehen sind. Die Kraftaufnehmer sind sowohl an der Schiene als auch an der Schwelle befestigt. Zur Kraftein- und -ausleitung sind jeweils zwei Kraftrückführungselemente vorgesehen, zwischen denen zwei balkenförmige Verformungskörper angeordnet sind. Die Verformungskörper sind symmetrisch zu einer senkrechten Mittellinie zum Schienenmittelpunkt angeordnet. Symmetrisch und quer im balkenförmigen Verformungskörper sind gegeneinander jeweils zwei Aussparungen vorgesehen, zwischen denen eine membranartige Verbindungswand belassen ist, an der jeweils die Dehnungsmessstreifen in Form von Scherkraftaufnehmern angeordnet sind. Zur Erfassung der Schienenbelastung auf einer Strecke sind mindestens auf der Länge einer Radumdrchung sicbcn Kraftmessvorrichtungen als Messstrecke vorgesehen, mit der bei langsamer Überfahrt eine sehr genaue Gewichtsermittlung durch Erfassung der vertikalen Radaufstandskräfte möglich ist. Zusätzlich sind am Anfang und Ende der Messstrecke in der neutralen Phase des Schienensteges noch Schubkraftaufnehmer vorgesehen, die die axiale Kraftnebenschlusskopplung während der Überfahrt ermitteln und rechnerisch bei der Gewichtsermittlung berücksichtigen. Bei dieser Vorrichtung ist gleichzeitig noch vorgesehen, die Vertikalkraftsignale jeder Kraftmessvorrichtung bei der Überfahrt miteinander zu vergleichen und bei einer vorgegebenen Abweichung als Unrundheit bzw. Flachstelle zu signalisieren oder anzuzeigen. Durch die ausschließlich vertikale Kraftkomponentenerfassung ist insbesondere bei einer schnelleren Überfahrt zumindest eine genaue Angabe über die Größe der Unrundheit und Flachstellenausbildung nicht möglich.
Der Erfindung liegt deshalb die Aufgabe zugrunde, eine Vorrichtung zur Messung verschiedener Schienenbelastungen während der Überfahrt schienengebundener Fahrzeuge zu schaffen, die bei einer dynamischen Schienenbelastung nicht nur die vertikal in die Schiene eingeleiteten Kräfte berücksichtigt.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die Messung nicht nur der vertikalen Kraftkomponenten, sondern mindestens auch der horizontalen Kraftkomponenten in Schwellenriehtung eine genaue Schienenbelastungsmessung möglich ist, bei der parasitäre Kräfte und Momente durch die Messung der Kraftkomponenten kompensierbar sind. Insbesondere durch die separate Messung der horizontalen und vertikalen Kraftkomponenten können diese in Biegerichtungen mit den höchsten Dehnungsbereichen erfasst werden, so dass insbesondere in der Messung der vertikalen Kraftkomponente nur geringe Störanteile enthalten oder ausgleichbar sind. Da mit einer solchen Kraftmessvorrichtung sowohl die horizontalen seitlichen Kraftkomponenten als auch die vertikalen Kraftkomponenten erfasst werden können, kann vorteilhafterweise ein vollständiges Belastungsbild bei der Überfahrt von Gleisfahrzeugen ermittelt werden. Derartige Kraftkomponentenmessungen können deshalb in einer Messstrecke vorteilhaft zur genauen Gewichts-, Unrundheit- und Flachstellenmessung genutzt werden.

Durch die seitlich neben dem Kraftcin- und Kraftausleitungselementen angeordneten Verformungskörpern ist vorteilhafterweise eine besonders flache Bauweise möglich, die einen Einbau in einen üblichen Gleisunterbau gestattet. Dabei ist bei einer besonderen Ausführungsart der Erfindung vorteilhafterweise auch eine Integration in einer Hohlschwelle möglich, die gegenüber herkömmlichen Eisenbahnschwellen austauschbar sind, ohne das große Veränderungen am Gleisunterbau notwendig sind.

Die Erfindung wird anhand einen Ausführungsbeispiels, das in der Zeichnung dargestellt ist, näher beschrieben. Es zeigen:
- Fig. 1:: die Seitenansicht einer Kraftmessvorrichtung zur Erfassung einer Schienenbelastung;
- Fig. 2:: ein Schnittbild in Draufsicht auf die Kraftmessvorrichtung in der Schnittcbcne BB;
- Fig. 3:: ein Schnittbild in Forderansicht der Kraftmessvorrichtung in der Schnittebene AA, und
- Fig. 4:: zwei in einer Hohlschwelle eingebaute Kraftmessvorrichtungen.

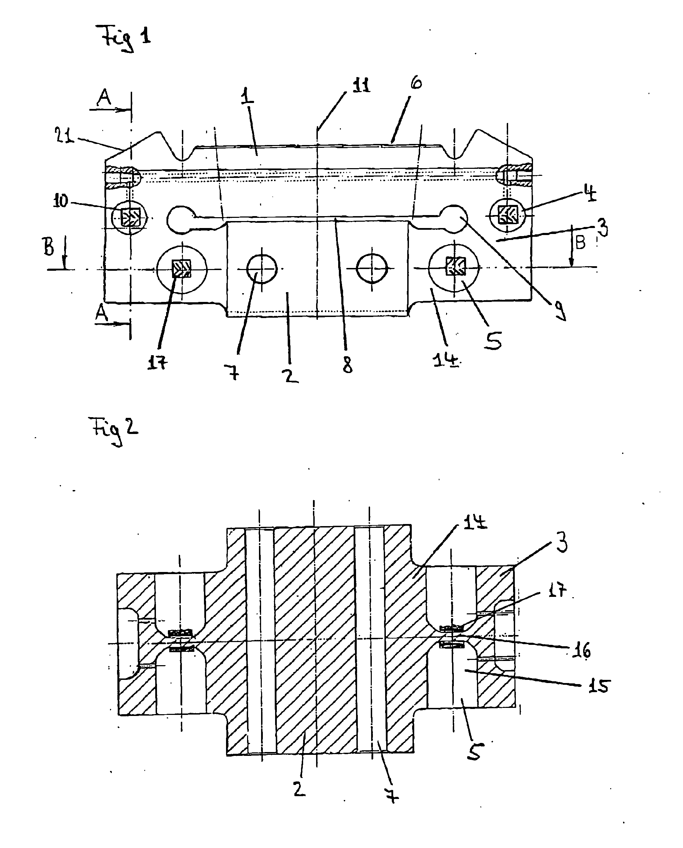

In Fig. 1 der Zeichnung ist eine Kraftmessvorrichtung in Seitenansicht dargestellt, die aus parallel übereinander angeordneten Kraftein- 1 und Kraftausleitungsteilen 2 besteht, die seitlich miL je einem Verformungskörper 3 verbunden sind, in denen jeweils zwei Messsenkungspaare 4,5 horizontal beabstandet vorgesehen sind.

Die Kraftmessvorrichtung ist einteilig ausgebildet und enthält oben ein horizontales balkenförmiges Krafteinleitungsteil 1, das in Einbaulage quer unter einer Schiene angeordnet ist. Deshalb entspricht die obere ebene Auflagefläche 6 auch mindestens der Sehienenfußbreite. Über nicht dargestellte Gewindebohrungen ist die Schiene mit herkömmlichen Befestigungsvorrichtungen fest auf dem Krafteinleitungsteil 1 aufschraubbar.

Parallel zum Krafteinleitungsteil 1 ist unter diesem ein balkenförmiges Kraftausleitungsteil 2 horizontal angeordnet, das in Längsrichtung mit einer Schwelle verbindbar ist. Zur Verbindung mit der Schwelle sind zwei durchgehende Querbohrungen 7 vorgesehen. Das Krafteinleitungsteil 1. und das Kraftausleitungsteil 2 sind durch einen Querspalt 8 von vorzugsweise 5mm Höhe voneinander beabstandet. Seitlich sind die horizontal übereinander angeordneten Krafteinleitungs- 1 und Kraltausleitungsteile 2 durch zwei Verformungskörper 3 miteinander verbunden, die in Einbaulage mindestens zum Teil vertikal angeordnet sind. Die Verformungnkörper 3 sind durch eine runde Aussparung 9 an jedem Ende des horizontalen Querspaltes 8 etwa halbkreisförmig oder C-förmig ausgebildet.

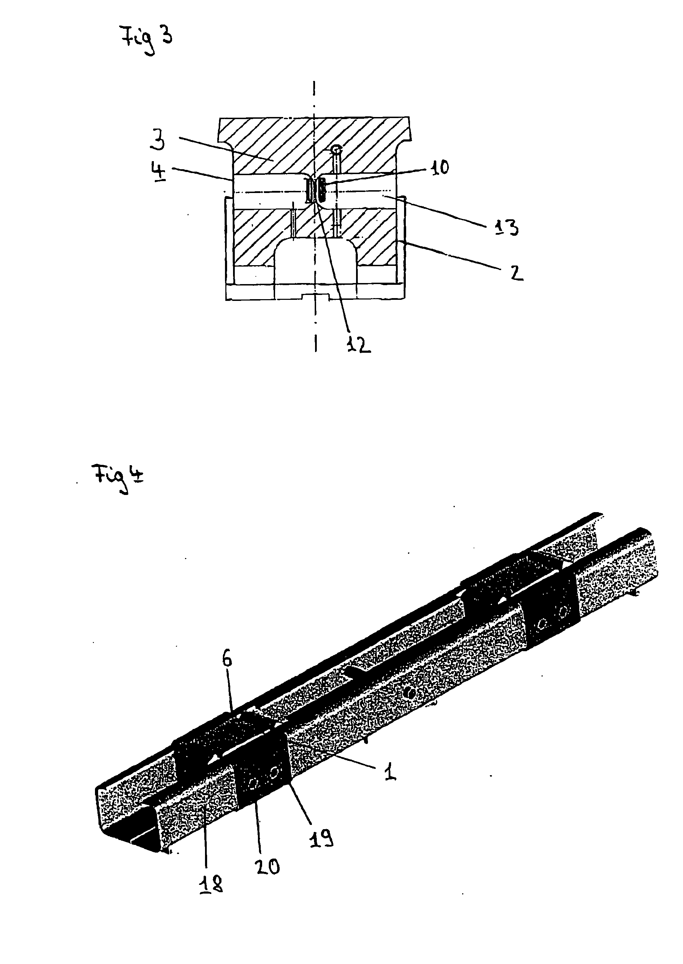

Seitlich neben diesen runden Aussparungen 9 ist in der Verlängerung des horizontalen Querspalts 8 jeweils ein oberes Messsenkungspaar 4 im vertikalen Teil des Verformungskörpers 3 angeordnet, die horizontal in Schienenrichtung vorgesehen sind. Die Messsenkungspaare 4 werden aus zwei gegeneinander gerichteten Bohrungen 13 gebildet, die im einzelnen im Schnittbild in Fig. 3 der Zeichnung dargestellt sind. Dabei isL zwischen den Bohrungen 13 jeweils eine membranartige Verbindungswand 12 von vorzugsweise 1 - 5mm Dicke vorgesehen, an der Dehnungsmessstreifen 10 in Form von Scherkzaftaufnehmern appliziert sind, wobei die Bohrungen 13 vorzugsweise einen Durchmesser von 35mm aufweisen . Mit diesen beiden oberen Messsenkungspaaren werden vorzugsweise die horizontalen seitlichen Kraftkomponenten erfasst, die bei einer Zugüberfahrt in das Krafteinleitungsteil 1 eingeleitet werden. Durch die symmetrische Anordnung der Kraftmesseinrichtung zu einer vertikalen Mittelebene 11 sind bei einer entsprechenden Verschaltung der Dehnungsmessstreifen zu einer Wheatston'schen Messbrücke auf einfache Weise parasitäre Störkräfte und -momente kompensierbar, die quer zur vertikalen Kraftmessrichtung gerichtet sind. Da diese parasitären Störkräfte und -momente meist verhältnismäßig klein gegenüber den vertikalen Gleisbelastungen sind, können diese oberen Messsenkungspaaren 4 durch entsprechende dünnere Verbindungswände 12 in ihrer Empfindlichkeit erhöht werden. Deshalb werden vorzugsweise für die beiden oberen Menssenkungspaare 4 Verbindungswände 12 von ca. 1 - 3mm Dicke vorgesehen.

Unterhalb des vertikalen Verformungskörperteils knickt dieser horizontal nach innen und stellt damit einen horizontalen Vcrformungskörperteil 14 dar, der mit dem innenliegenden horizontalen Kraftausleitungsteil 2 verbunden ist. In diesem horizontalen Verformungskörperteil 14 sind unterhalb der seitlichen runden Aussparungen 9 jeweils ein weiteres unteres Messsenkungspaar 5 angeordnet, die beide symmetrisch zur vertikalen Mittelebene 11 vorgesehen sind. Diese unteren Messsenkungspaare 5 sind im einzelnen im Schnittbild der Fig. 2 der Zeichnung dargestellt. Danach bestehen die beiden unteren Messsenkungspaare 5 ebenfalls aus jeweils zwei entgegengerichteten horizontalen Bohrungen 15 in Schienenrichtung, an deren ebenen Verbindungswänden 16 ebenfalls Scherkraftaufnehmer 17 appliziert sind. Dabei sind diese membranartigen Verbindungswände 16 der unteren Messsenkungspaare 5 vorzugsweise 5 - 15mm dick und zur Erfassung der vertikalen Kraftkomponenten vorgesehen, die im wesentlichen der vertikalen Schienenbelantung proportional ist. Die Wahl der Wanddicke bestimmt sich dabei in erster Linie nach dcr vorgesehenen maximalen Schienenbelastung und der gewünschten Empfindlichkeit. Dabei sind die unteren Messsenkungspaare 5 unmittelbar unterhalb der runden Aussparung 9, da dort der Dehnungsbereich des Verformungskörpers 3 bei vertikaler Belastung am höchsten ist. Gleichfalls ist das obere Messsenkungspaar 4 seitlich neben den runden Aussparungen 9 vorgesehen, da dort der Bereich bei horizontaler Belastung mit der höchsten Dehnung ist, so dass sowohl die oberen- 4 als auch die unteren Messsenkungspaare 5 auch an anderen Stellen des Verformungskörpers 3 angeordnet werden könnten. Dabei ist es aber vorteilhaft, dass die beiden oberen Messsenkungspaare 4 in einem vertikalen und die unteren Messsenkungspaare 5 in einem horizontalen Verformungskörperteil 14 angeordnet werden.

Eine derartige Kraftmessvorrichtung wird vorzugsweise aus einer Edelstahllegierung hergestellt und mit Hilfe spanender Bcarbeitungsverfahren aus einem Stück gefertigt. Die horizontale Einbaulage derartiger Kraftmessvorrichtungen ist in Fig. 1 der Zeichnung dargestellt. Dabei sind in einer untsprechend ausgcbildeLen Hohlschwelle 18 zwei Kraftaufnehmer als Kraftmessvorrichtung nach Fig. 1 der Zeichnung befestigt. Die Hohlschwellcn 18 bestehen aus zwei U-förmigen Ilalbschalen, die seitlich die Kraftmessvorrichtungen umgreifen. Dabei sind in den Hohlschwellen 18 im herkömmlichen Schienenabstand zwei spezielle Halterungen 19 integriert, mit denen die Kraftmessvorrichtung jeweils durch zwei Schrauben 20, die durch die beiden Querbohrungen 7 der Kraftausleitungsteile 2 geführt sind, befestigt. Zur platzsparenden Befestigung in einer derartigen Hohlschwelle 18 besitzen die Kraftmessvorrichtungen vorzugsweise Außenmaße von ca. 425mm Länge, 240mm Breite und 195mm Höhe. Dadurch sind diese in die Hohlschwellen 18 einschraubbar, die ihrerseits lediglich Außenabmessungen von herkömmlichen Schwellen aufweisen müssen und gegenüber diesen auf einfache Weise austauschbar sind, ohne dass am Gleisunterbau nennenswerte Veränderungen notwendig werden. Die Kraftmessvorrichtungen können aber auch auf einer herkömmlichen Schwelle mittels der speziellen Halterungen 19 oder mitsamt der gesamten Hohlschwelle befestigt werden, sofern dies von der Höhe des Gleiskörpers oder des Gleisunterbaus möglich ist.

## Patentansprüche

1. Kraftmessvorrichtung zur Erfassung der Schienenbelastung., die quer zwischen mindestens einer Schiene und längs deren Schwelle angeordnet ist, und die aus mindestens einem balkenförmigen Krafteinleitungsteil (1), das mit der Schiene und aus mindestens einem balkenförmigen Kraftausleitungsteil (2), das mit der Schwelle verbindbar ist, besteht, und die parallel und horizontal übereinander angeordnet sind, wobei zwischen den Kraftrein- (1) und Kraftausleitungsteilen (2) mindestens ein Messsenkungspaar (4,5) an mindestens einem Verformungskörper (3) vorgesehen ist, wobei dass Krafteinleitungsteil (1) durch einen horizontalen Querspalt (8) vom KraftauslcitungstPil (2) beabstandet ist und wobei beide Teile seitlich mit je einem zumindest teilweise vertikal ausgerichteten Verformunqskörper(3) verbunden sind, **dadurch gekennzeichnet, dass** mindestens vertikal beabstandet je zwei Messenkungspaare (4,5) in den Verformungskörpern (3) vorgesehen sind, wobei das obere Messsenkungspaar (4) zur Erfassung der horizontalen- und das untere Messenkungspaar zur Erfassung der vertikalen Kräfte vorgesehen ist.

2. Kraftmessvorrichtung nach Anspruch 1, **dadurch gekennzeichnet, dass** der Verformungskörper (3) durch eine runde oder eckige Aussparung (9) am seitlichen Ende des Querspalts (8) etwa halbkreisförmig oder C-förmig ausgebildet ist, wobei, seitlich neben der runden oder eckigen Aussparung (9) im vertikalen Teil des Verformungskörpers (3) mindestens ein oberes Messsenkungspaar (4) angeordnet ist.

3. Kraftmessvorrichtung nach Anspruch 2, **dadurch gekennzeichnet, dass** im Verformungskörper (3) unterhalb des oberen Messsenkungspaares (4) mindestens ein unteres Messsenkungspaar (5) in der seitlichen Verlängerung zum Kraftausleitungsteil (2) ungeordnet ist.

4. Kraftmessvorrichtung nach einem der vorhergehenden Ansprüche, **dadurch gekennzeichnet, dass** diese symmetrisch zu einer vertikalen Mittelfläche (11) ausgebildet ist und somit mindestens zwei Verformungskörper (3) mit zwei oberen- (4) und zwei unteren Messsenkungspaaren (5) enthält.

5. Kraftmessvorrichtung nach einem der vorhergehenden Ansprüche, **dadurch gekennzeichnet, dass** der Vezformungskörper (3) in der Verlängerung der Kraftein- (1) und Kraftausleitungsteile (2) seitliche schräge Begrenzungsflächen (21) aufweist.

6. Kraftmessvorrichtung nach einem der vorhergehenden Ansprüche, **dadurch gekennzeichnet, dass** die runde Aussparung (9) in SchienenlangsrichLung durchgehend verläuft und als Bohrung oder als Rundung mit unterschiedlichen Steigungs- bzw. Radienwerten ausgebildet ist und Durchmesser von 20 bis 70mm aufweist.

7. Kraftmessvorrichtung nach einem der vorhergehenden Ansprüche, **dadurch gekennzeichnet, dass** die oberen Messsenkungspaare (4) durch zwei entgegengerichtete Bohrungen (13) oder runde oder eckige Aussparungen gebildet sind, die miteinander eine Verbindungswand (12) bilden, an der Dehnungsmessstreifen (10) appliziert sind, wobei die Bohrungen (13) oder Aussparungen die gleiche Tiefe und Durchmesserwerte von 20 bis 50mm, sowie eine Dicke der verbindungswand (12) von 1 bis 5mm aufweisen.

8. Kraftmessvorrichtung nach einem der vorhergehenden Ansprüche, **dadurch gekennzeichnet, dass** die unteren Messsenkungspaare (5) durch zwei entgegengerichtete Bohrungen (15) oder runde oder eckige Aussparungen gebildet sind, die miteinander eine Verbindungswand (16) bilden, an der Dehnungsmessstreifen (17) appliziert sind, wobei die Bohrungen (15) oder Aussparungen gleiche Tiefe und Durchmesserwerte von 30 bis 80mm sowie eine Wanddicke von 3 bis 15mm aufweisen.

9. Kraftmessvorrichtung nach der vorhergehenden Ansprüche**, dadurch gekennzeichnet, dass** der Krafteinleitungsteil (1) eine obere ebene Fläche (6) enthält, die zur Befestigung des Schienenfußes dient und das das Kraftausleitungsteil (2) symmetrisch zu der vertikalen Mittelfläche (11) mindestens zwei Querbohrungen (7) zur Verbindung mit einer Schwelle (18) oder einer Halterung (19), die mit einer Schwelle verbindbar ist aufweist.

10. Kraftmessvorrichtung nach einem der vorhergehenden Ansprüche, **dadurch gekennzeichnet, dass** diese in einer Hohlschwelle (18) oder auf einer Schwelle angeordnet ist, wobei mindestens zwei Kraftaufnehmer im Schienenabstand in der Hohlschwelle (18) oder auf der Schwelle befestigt sind.

11. Kraftmessvorrichtung nach Anspruch 10, **dadurch gekennzeichnet, dass** die Hohlschwelle (JB) aus zwei U-förmigen Metallteilen besteht, die zum Gleisfuß mindestens eine Öffnung aufweist, aus dur die obere ebene Fläche (6) des Krafteinleitungsteils (1) herausragt, wobei die Hohlschwelle (18) Außenmaße einer herkömmlichen Schwelle besitzt.

## Claims

1. Force measuring device for detecting load on a rail, which device is positioned transversely between at least one rail and along the sleeper thereof and which consists of at least one beam-shaped force input part (1), which can be connected to the rail, and of at least one beam-shaped force output part (2), which can be connected to the sleeper, and which are in a parallel and horizontally superimposed arrangement, at least one countersunk measuring pair (4, 5) being provided between the force input part (1) and the force output part (2) on at least one deformation body (3), wherein the force input part (1) is spaced from the force output part (2) by a horizontal transverse gap (8) and wherein both parts are laterally connected to a respective at least partly vertically oriented deformation body (3), **characterised in that** two countersunk measuring pairs (4, 5) which are at least vertically spaced apart from each other are each provided in the deformation bodies (3), the upper countersunk measuring pair (4) being provided to detect the horizontal forces and the lower countersunk measuring pair (5) being provided to detect the vertical forces.

2. Force measuring device according to claim 1, **characterised in that** the deformation body (3) is configured approximately in a semi-circular shape or in a C shape by a round or polygonal opening (9) at the lateral end of the transverse gap (8), at least one upper countersunk measuring pair (4) being positioned in the vertical part of the deformation body (3) laterally next to the round or polygonal opening (9).

3. Force measuring device according to claim 2, **characterised in that** at least one lower countersunk measuring pair (5) is positioned in the lateral extension to the force output part (2) in the deformation body (3) below the upper countersunk measuring pair (4).

4. Force measuring device according to any one of the preceding claims, **characterised in that** this device is configured symmetrically to a vertical centre plane (11) and thus contains at least two deformation bodies (3) with two upper countersunk measuring pairs (4) and two lower countersunk measuring pairs (5).

5. Force measuring device according to any one of the preceding claims, **characterised in that** the deformation body (3) has lateral oblique boundary surfaces (21) in the extension of the force input (1) and the force output (2) parts.

6. Force measuring device according to any one of the preceding claims, **characterised in that** the round opening (9) runs continuously in the longitudinal direction of the rail and is configured as a hole or a curve with different gradient or radius values and has a diameter of 20 to 70 mm. '

7. Force measuring device according to any one of the preceding claims, **characterised in that** the upper countersunk measuring pairs (4) are formed by two oppositely-directed holes (13) or by round or polygonal openinges which form with one another a connecting wall (12) to which strain gauges (10) are applied, the holes (13) or openinges having the same depth and diameter values of 20 to 50 mm, as well as a thickness of the connecting wall (12) of 1 to 5 mm.

8. Force measuring device according to any one of the preceding claims, **characterised in that** the lower countersunk measuring pairs (5) are formed by two holes (15) oppositely-directed or by round or polygonal openings which form with one another a connecting wall (16) to which strain gauges (17) are applied, the holes (15) or openings having the same depth and diameter values of 30 to 80 mm, as well as a wall thickness of 3 to 15 mm.

9. Force measuring device according to any one of the preceding claims, **characterised in that** the force input part (1) comprises an upper planar surface (6) which serves to attach the rail foot and **in that** the force output part (2) has symmetrically to the vertical centre plane (11) at least two cross holes (7) for connection with a sleeper (18) or a holding device (19) which can be connected to a sleeper.

10. Force measuring device according to any one of the preceding claims, **characterised in that** this device is positioned in a hollow sleeper (18) or on a sleeper, at least two force transducers in the rail spacing being secured in the hollow sleeper (18) or on the sleeper.

11. Force measuring device according to clam 10, **characterised in that** the hollow sleeper (18) consists of two U-shaped metal parts which have towards the rail foot at least one opening from which the upper planar surface (6) of the force input part (1) projects, the hollow sleeper (18) having external dimensions of a conventional sleeper.

## Revendications

1. Dynamomètre destiné au calcul de la sollicitation de rails, qui est agencé transversalement entre au moins un rail et le long de son seuil et qui se compose d'au moins une partie d'induction de forces en forme de poutre (1), qui peut être assemblée avec le rail, et d'au moins une partie d'évacuation de forces en forme de poutre (2), qui peut être assemblée avec le seuil, lesquelles sont agencées parallèlement et horizontalement l'une au-dessus de l'autre, où au moins une paire de diminution de la mesure (4, 5) est prévue entre les parties d'induction (1) et d'évacuation (2) des forces sur au moins un élément de déformation (3), où la partie d'induction des forces (1) est écartée de la partie d'évacuation des forces (2) par une fente transversale horizontale (8) et où les deux parties sont chacune assemblées latéralement avec un élément de déformation (3) orienté au moins en partie dans le sens vertical, **caractérisé en ce que** deux paires de diminution de la mesure (4, 5) écartées au moins dans le sens vertical sont respectivement prévues dans les éléments de déformation (3), la paire de diminution de la mesure supérieure (4) étant prévue pour le calcul des forces horizontales et la paire de diminution de la mesure inférieure pour le calcul des forces verticales.

2. Dynamomètre selon la revendication 1, **caractérisé en ce que** l'élément de déformation (3) est formé par un évidement rond ou polygonal (9) à l'extrémité latérale de la fente transversale (8) sensiblement en forme de demi-cercle ou en forme de C, au moins une paire de diminution de la mesure supérieure (4) étant agencée latéralement à côté de l'évidement rond ou polygonal (9) dans la partie verticale de l'élément de déformation (3).

3. Dynamomètre selon la revendication 2, **caractérisé en ce qu'**au moins une paire de diminution de la mesure inférieure (5) est agencée dans l'élément de déformation (3) en dessous de la paire de diminution de la mesure supérieure (4) dans le prolongement latéral de la partie d'évacuation des forces (2).

4. Dynamomètre selon l'une des revendications précédentes, **caractérisé en ce qu'**il est conçu symétriquement par rapport à une surface médiane verticale (11) et comprend par conséquent au moins deux éléments de déformation (3) avec deux paires de diminution de la mesure supérieures (4) et inférieures (5).

5. Dynamomètre selon l'une des revendications précédentes, **caractérisé en ce que** l'élément de déformation (3) présente des surfaces de délimitation obliques latérales (21) dans le prolongement des parties d'induction (1) et d'évacuation (2) des forces.

6. Dynamomètre selon l'une des revendications précédentes, **caractérisé en ce que** l'évidement rond (9) s'étend de façon continue dans le sens longitudinal du rail, il est conçu en tant que tubage ou en tant que rotondité avec des valeurs d'inclinaison ou de rayon différentes et il présente un diamètre de 20 à 70 mm.

7. Dynamomètre selon l'une des revendications précédentes, **caractérisé en ce que** les paires de diminution de la mesure supérieures (4) sont formées par deux alésages (13) dirigés en sens opposé ou des évidements ronds ou polygonaux qui forment l'un avec l'autre une paroi d'assemblage (12) sur laquelle des jauges extensométriques (10) sont appliquées, les alésages (13) ou les évidements présentant la même profondeur et une mesure de diamètre de 20 à 50 mm, ainsi qu'une épaisseur de la paroi d'assemblage (12) de 1 à 5 mm.

8. Dynamomètre selon l'une des revendications précédentes, **caractérisé en ce que** les paires de diminution de la mesure inférieures (5) sont formées par deux alésages (15) dirigés en sens opposé ou des évidements ronds ou polygonaux qui forment l'un avec l'autre une paroi d'assemblage (16) sur laquelle des jauges extensométriques (17) sont appliquées, les alésages (15) ou les évidements présentant la même profondeur et une mesure de diamètre de 30 à 80 mm, ainsi qu'une épaisseur de paroi de 3 à 15 mm.

9. Dynamomètre selon l'une des revendications précédentes, **caractérisé en ce que** la partie d'induction des forces (1) comprend une surface supérieure plane (6) qui sert à la fixation du patin du rail et **en ce que** la partie d'évacuation des forces (2) présente symétriquement par rapport à la surface médiane verticale (11) au moins deux alésages transversaux (7) destinés à l'assemblage avec un seuil (18) ou un support (19) qui peut être assemblé avec un seuil.

10. Dynamomètre selon l'une des revendications précédentes, **caractérisé en ce qu'**il est agencé dans un seuil creux (18) ou sur un seuil, au moins deux transducteurs de force étant fixés dans l'écartement des rails dans le seuil creux (18) ou sur le seuil.

11. Dynamomètre selon la revendication 10, **caractérisé en ce que** le seuil creux (18) se compose de deux parties métalliques en forme de U qui présentent en direction du patin du rail au moins une ouverture à partir de laquelle la surface supérieure plane (6) de la partie d'induction des forces (1) fait saillie, le seuil creux (18) ayant les dimensions extérieures d'un seuil conventionnel.
